Europäisches Patentamt

European Patent Office

Office européen des brevets

Publication number: **0 285 715**
**A1**

# EUROPEAN PATENT APPLICATION

(21) Application number: 87303068.8

(51) Int. Cl.⁴ **B01J 29/38**

(22) Date of filing: 09.04.87

(43) Date of publication of application:
**12.10.88 Bulletin 88/41**

(84) Designated Contracting States:
**BE DE FR GB IT NL SE**

(71) Applicant: **MOBIL OIL CORPORATION**
**150 East 42nd Street**
**New York New York 10017(US)**

(72) Inventor: **Wong, Stephen Sui Fai**
**3 Carrol Joy Road**
**Medford New Jersey 08055(US)**
Inventor: **Le, Quang Ngoc**
**330 Rhode Island Avenue**
**Cherry Hill New Jersey 08002(US)**
Inventor: **Tsao, Ying-Yen Peter**
**122 Dilworth Lane**
**Longhorne Pennsylvania 19047(US)**

(74) Representative: **Cooper, John Anthony et al**
**Mobil Court 3 Clements Inn**
**London WC2A 2EB(GB)**

(54) Reactivitation of noble metal containing zeolite catalysts.

(57) A method for reactivating a zeolite catalyst containing sulfur oxide poisoned noble metal, such as an oxygen regenerated platinum zeolite beta catalyst, involves contacting the catalyst with an acidic aqueous solution having a pH below about 7 and containing a Bronsted acid compound having a dissociation constant ranging from $1 \times 10^{-14}$ to $2 \times 10^{-1}$.

EP 0 285 715 A1

# REACTIVATION OF NOBLE METAL CONTAINING ZEOLITE CATALYSTS

The present invention relates to a method for reactivating noble metal-containing zeolite catalysts.

The deactivation of noble metal-containing zeolite catalysts due to the deposition on the catalyst of carbonaceous residues is a well-known phenomenon which has received much attention in the technical and patent literature. The problem with regard to catalyst deactivation is particularly acute with respect to supported noble metal-containing catalysts employed in the reforming of naphtha feedstocks. Undesired metal migration and agglomeration can occur during preparation, calcination, or oxidative regeneration of such catalysts, resulting in significant losses in catalyst properties such as activity. It is also believed that noble metal deactivation can occur not only by agglomeration but by the association of a noble metal component with a material which chemically poisons the noble metal surface. One such poisoning phenomenon is believed to arise from the association of sulfur oxide, e.g. $SO_3$ and $SO_4$ with the noble metal. This can occur, for example, during oxidative regeneration of the catalyst when sulfur contaminants in the reactor are deposited on the catalyst. A significant reduction in hydrogen, oxygen and/or carbon monoxide chemisorption capacities of the catalyst will often result.

According to the present invention, there is provided a method for reactivating a sulfur oxide poisoned, noble metal-containing zeolite catalyst which comprises removing at least some of said sulfur oxides from said catalyst by contacting said catalyst with an aqueous solution containing a Bronsted acid compound having a dissociation constant ranging from $1 \times 10^{-14}$ to $2 \times 10^{-1}$ which has been added such that the resulting aqueous solution has a pH below about 7.

Treatment of noble metal-containing zeolites with ethylenediamine tetraacetic acid (EDTA) to improve noble metal dispersion is disclosed in U.S. Patent No. 4,148,750. U.S. Patents 3,235,486 and 3,256,205 disclose the reactivation of non-noble Group VIII metal-containing zeolites prior to regeneration by contact with a weakly acidic aqueous solution which converts the metal components into a soluble salt which is redistributed on the catalyst support. All of these references suggest a method of reactivation which entails initial redispersion. Treatment with aqueous acidic solution to reactivate, but not to redisperse the metal component of regenerated noble metal containing catalysts is believed to be novel.

The catalyst treated by the method of the present invention contains at least one noble metal such as platinum, palladium, iridium, osmium, rhodium and ruthenium. Where said catalyst contains more than one metal, the other metal or metals can be selected from the group consisting of Group IB, Group IVB, Group VIIA, and Group VIII metals. Generally, the catalyst treated by the present invention has a noble metal content ranging from 0.01 to 10 weight percent, preferably 0.1 to 3 weight percent.

The zeolites which may be rejuvenated by the present method include large pore zeolites such as zeolite X, zeolite Y, zeolite beta, ZSM-3, ZSM-4, ZSM-18 and ZSM-20, as well as medium pore zeolites such as ZSM-5, ZSM-11, ZSM-12, ZSM-23, ZSM-35, ZSM-38, ZSM-48 and other materials, including crystalline silicates having the crystal structure of these zeolites. Zeolite Y is described in greater detail in U.S. Patent No. 3,130,007. Zeolite beta is described in U.S. Patent No. 3,308,069. ZSM-3 is described in greater detail in U.S. Patent No. 3,415,736. ZSM-4 is described in U.S. Patent No. 4,021,447. ZSM-5 is described in greater detail in U.S. Patent Nos. 3,702,886 and Re 29,948. ZSM-11 is described in greater detail in U.S. Patent No. 3,709,979. ZSM-12 is described in U.S. Patent No. 3,832,449. ZSM-18 is described in U.S. Patent No. 3,950,496. ZSM-20 is described in U.S. Patent No. 3,972,983. ZSM-23 is described in U.S. Patent No. 4,076,842. ZSM-35, a synthetic ferrierite-type material, is described in U.S. Patent No. 4,016,245.

ZSM-38, a synthetic ferrierite-type material, is described in U.S. Patent No. 4,046,859. ZSM-48 is more particularly described in U.S. Patent No. 4,397,827.

The present invention is particularly useful in reactivating catalysts employed in isomerization processes such as isomerization dewaxing. These catalysts, such as noble metal-containing zeolite beta, are described further in U.S. Patent 4,419,220. It is generally preferred that the zeolites treated in the present invention be acid resistant, i.e., a material able to retain its crystallinity, as measured by X-ray and sorption capacity, in the presence of acid.

The present invention is useful in reactivating noble metal-containing zeolite catalysts which are in a deactivated state attributable at least in part to sulfur oxide poisoning of the noble metal function. When it becomes apparent that a catalyst has become so deactivated, for example, during oxidative regeneration, the catalyst is contacted with an aqueous solution containing a Bronsted acid compound having a dissociation constant ranging from about $1 \times 10^{-14}$ to about $2 \times 10^{-1}$. Sufficient quantities of the Bronsted acid are added to give the aqueous solution a pH below about 7, preferably below about 6, most preferably 0.1 to 3.

The method of the present invention may be used either in place of or in combination with conventional reactivation methods. In particular, it is believed useful when used in conjunction with reactivation methods which serve to disperse noble metals which have become agglomerated during use of the catalyst. Such methods include $H_2$-$O_2$ redox processes and halogen activation methods. When the acid treated zeolites of the present invention are subjected to chlorine activation method, it has been found that noble metal dispersion is also greatly enhanced. One such halogen activation method comprises contacting the acid extracted catalyst with a halogen-containing gas. For example, a mixture of chlorine, oxygen, water and nitrogen may be used. Such a mixture may contain 267 to 2670 Pa (2 to 20 torr) chlorine, 0 to 533 kPa (0 to 4000 torr) oxygen, 0 to 6670 Pa (0 to 50 torr) $H_2O$ and the remainder nitrogen. Preferably the mixture contains 667 to 1600 Pa (5 to 12 torr) chlorine. 267 to 533 kPa (200 to 400 torr) oxygen, and 0 to 1333 Pa (0 to 10 torr) $H_2O$, with the remainder being nitrogen. Contacting temperatures may range from 400 to 500°C, preferably 430 to 470°C and such contacting may be carried out for 2 to 10 hours, preferably 3 to 5 hours.

The zeolite catalyst treated by the present invention may be combined with an inorganic oxide support such as silica, alumina, or silica-alumina.

The Bronsted acid compounds suited for use in the present invention include ammonium salts, e.g. ammonium carbonate and ammonium nitrate, organic acids such as acetic acid and formic acid, hydrogen peroxide, nitric acid and the hydrogen halides, such as hydrogen fluoride and hydrogen chloride. Mixtures of these Bronsted acid compounds may also be used, for example, hydrogen fluoride and hydrogen peroxide.

In the present invention, the catalyst is contacted with the aqueous solution at temperatures ranging from 25 to 100°C, preferably ranging from 25 to 80°C and pressures of 200 to 4240 kPa (15 to 600 psig), preferably 200 to 2860 kPa (15 to 400 psig). Contact times may range from 0.5 to 10 hours, preferably 0.5 to 2. Generally, it has been observed that the leaching out of the poisoning sulfur oxide is enhanced by increasing the contacting temperature, say 20 to 30°C above room temperature. Moreover, subsequent treatments with the aqueous solution have been found to further reduce the sulfur oxide content of the catalyst.

The sulfur oxide removal efficiency has also been found to be related to the pH of the aqueous solution employed. Increasing acidity appears to improve sulfur oxide extraction. Ammonium salts are found to be more effective than the strong acids at higher pHs.

The noble metal of the zeolite catalysts treated by the method of the present invention may preferably be in a reduced or sulfided form.

The present invention is further described by the following examples.

## Example 1

An aged isomerization dewaxing catalyst (0.6 wt % Pt on an alumina bound steamed zeolite beta) containing 15 weight percent coke was regenerated under simulated commercial regeneration conditions, namely a pressure of 791 kPa (100 psig), 7798 Pa (60 torr) $H_2O$, 1-7% $O_2$, and a maximum temperature of 454°C. The regenerated catalyst whose properties are set out in Table 1 was then treated with various aqueous solutions with the pH ranging from 0.1 to 7.0 at 25°C, 101 kPa (1 atm.) pressure for 1 hour. The treated samples were then oven dried at 100°C for 24 hours. Both untreated and treated catalysts were reduced at 200°C and then tested for hydrogen and oxygen chemisorption. The results are tabulated in Table 2.

## TABLE 1

### Properties of Regenerated Catalyst

As Received, Wt %

| | |
|---|---|
| C | 0.015 |
| S | 0.45 |
| S (a) | 0.38 |

| | |
|---|---|
| wt % Pt | 0.20 |

Chemisorption (b)

| | |
|---|---|
| H/Pt | 0.05 |
| O/Pt | 0.09 |

(a)  Wt % of sulfur in sulfur oxide forms.

(b)  Chemisorption after 200°C reduction

## TABLE 2

### Effect of Solution Type on Sulfur Oxides Removal from Regenerated Isomerization Catalyst

| Solution | Initial pH | wt% Sulfur Oxides Removal |
|---|---|---|
| None | - | - |
| Deionized Water | 7.09 | 35 |
| Hydrogen Peroxide | 4.69 | 51 |
| Ammonium Nitrate | 5.55 | 47 |
| Ammonium Carbonate | 5.06 | 53 |
| Acetic Acid | 3.06 | 58 |
| Formic Acid | 2.65 | 71 |
| Nitric Acid | 0.13 | 87 |

The results indicate that the aqueous extraction significantly enhances hydrogen and oxygen chemisorption properties. Table 3 compares the Pt chemisorptive properties of the regenerated catalyst before and after extracting with a hydrogen peroxide solution (4.7 pH). This hydrogen peroxide treatment removed about 51% sulfur oxide (Table 1) and activated the Pt functions as indicated by the increase in both hydrogen and oxygen chemisorption. A similar effect was also observed with CO adsorption measurements by FTIR. X-ray analysis showed no change in large Pt crystallites about (~50Å), at 0.20% by weight, indicating that extraction treatment did not significantly alter Pt size distribution. These results clearly confirm the relationship between Pt metal function and sulfur-related poisoning of the metal.

## TABLE 3

## Comparison of the Pt Properties of Regenerated

## Isomerization Catalyst Before and After $H_2O_2$ Treatment

|  | Regenerated | Extracted |
|---|---|---|
| H/Pt Chemisorption (a) | 0.05 | 0.14 |
| O/Pt Chemisorption (a) | 0.09 | 0.15 |
| CO Adsorption (b) | 0.20 | 0.40 |
| XRD, Wt % Pt | 0.20 | 0.20 |

(a) Chemisorption after 200°C Reduction

(b) Measured by FTIR

### Example 2

A sample of the regenerated catalyst of Example 1 was extracted with aqueous $HNO_3$ solutions prepared at various dilution levels (pH ranging from 4.5 to 0.1). The results ar shown in Table 4. The data indicate that increasing acidity improved sulfate extraction. However, the nitric acid solutions with pH of about 2 were only moderately effective and extracted only 38-45% sulfur oxides compared to 87% with 0.13 pH solution.

## TABLE 4

## Effect of pH on Sulfur Oxides Removal Using

## Various Dilute Nitric Acid Solutions

| Initial pH | wt% Sulfur Oxides Removal |
|---|---|
| 4.35 | 39 |
| 3.22 | 41 |
| 1.98 | 44 |
| 0.34 | 61 |
| 0.13 | 87 |

## Example 3

A 0.6 weight percent platinum isomerization dewaxing catalyst having a H/Pt of 1.38 and agglomeration of 1%, i.e., having 1% of its platinum in X-ray visible large particles, was severely sintered at 450°C resulting in H/Pt of 0.36 and agglomeration of 41%. The sintered catalyst was then subjected to raw feed testing with light virgin gas oil. The resulting coked catalyst was oxidatively regenerated at 450°C for 95 hours to remove coke. The resulting catalyst had a sulfur content of 0.16%, a sulfur oxide ($SO_4 =$) content of 0.11% and platinum agglomeration of 69%. The catalyst was then extracted with an aqueous solution of $HNO_3$ having a pH of 0.4. The catalyst exhibited H.Pt of 0.12, a sulfur content of 0.03% and a sulfur oxide ($SO_4 =$) content of only 0.02%. The extracted catalyst was then subjected to a chlorine treatment to disperse agglomerated platinum by exposure to a mixture of 1333 Pa (10 torr) $Cl_2$, 1333 Pa (10 torr) $H_2O$, 50.7 kPa (380 torr) $O_2$ and nitrogen at 450°C for four hours. The resulting catalyst had H/Pt of 0.64, a sulfur content of 0.04% and sulfur oxide ($SO_4 =$) content of 0.03%. X-ray diffraction showed zero platinum agglomeration.

## Example 4

A 0.6 weight percent platinum isomerization dewaxing catalyst having a H/Pt of 1.28 was subjected to raw feed testing with light virgin gas oil. The resulting coked catalyst was then oxidatively regenerated at 450°C for 12 hours to remove coke. The resulting catalyst had a sulfur content of 0.10%, a sulfur oxide ($SO_4 =$) content of 0.10% and platinum agglomeration of 14%. The catalyst was then extracted with an aqueous solution of $HNO_3$ having a pH of 0.4. The catalyst exhibited H/Pt of 0.35, and platinum agglomeration of 14%. The extracted cataust was then subjected to a chlorine treatment to disperse agglomerated platinum by exposure to a mixture of 1333 Pa (10 torr) $Cl_2$, 1333 Pa (10 torr) $H_2O$, 50.7 kPa (380 torr) $O_2$ and nitrogen at 450°C for four hours. The resulting catalyst had H/Pt of 1.10, and X-ray diffraction showed zero platinum agglomeration.

## Example 5

A 0.6 weight percent platinum isomerization dewaxing catalyst having a H/Pt of 1.28 was subjected to raw feed testing with light virgin gas oil. The resulting coked catalyst was oxidatively regenerated at 450°C for 16 hours to remove coke. The resulting catalyst had a sulfur content of 0.12%, a sulfur oxide ($SO_4 =$) content of 0.10% and platinum agglomeration of 21% and H/Pt of 0.33. The catalyst was then extracted with an aqueous solution of $HNO_3$ having a pH of 0.4. The catalyst had a sulfur content of 0.04% and a sulfur oxide ($SO_4 =$) content of 0.04%. The extracted catalyst was then subjected to a chlorine treatment to disperse agglomerated platinum by exposure to a mixture of 1333 Pa (10 torr) $Cl_2$, 1333 Pa (10 torr) $H_2O$, 50.7 kPa (380 torr) $O_2$ and nitrogen at 450°C for four hours. The resulting catalyst had H/Pt of 1.03 and X-ray diffraction showed zero platinum agglomeration.

## Example 6

Example 5 was repeated except that the acid extraction step was omitted. After chlorine activation the catalyst had a H/Pt of 0.49, a sulfur content of 0.11% a sulfur oxide ($SO_4 =$) content of 0.08% X-ray diffraction showed 11% platinum agglomeration.

## Claims

1. A method for reactivating a sulfur oxide poisoned, noble metal-containing zeolite catalyst which comprises removing at least some of said sulfur oxides from said catalyst by contacting said catalyst with an aqueous solution containing a Bronsted acid compound having a dissociation constant ranging from $1 \times 10^{-14}$ to $2 \times 10^{-1}$ which has been added such that the resulting aqueous solution has a pH below about 7.

2. The method of claim 1 wherein said compound is an ammonium salt.

3. The method of claim 1 wherein said compound is selected from nitric acid, carbonic acid and hydrogen peroxide.

4. The method of claim 1 wherein said compound is an organic acid.

5. The method of claim 1 wherein said compound is a hydrogen halide.

6. The method of claim 1 wherein said aqueous solution contains hydrogen peroxide and hydrogen fluoride.

7. The method of any preceding claim wherein said contacting is carried out at 25 to 100°C and 200 to 4240 kPa (15 to 600 psig) for 0.5 to 10 hours.

8. The method of any preceding claim wherein said pH ranges from about 0.1 to 3.

9. The method of any preceding claim and including the subsequent step of contacting the catalyst with a halogen-containing gas to assist in redispersion of the noble metal.

10. The method of claim 9 wherein said halogen containing gas has a partial pressure of contains 267 to 2670 Pa chlorine, 0 to 533 kPa oxygen and 0 to 6670 Pa $H_2O$.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 055 482  (H.E. ROBSON) | | B 01 J  29/38 |
| | --- | | |
| A | US-A-3 684 738  (N.Y. CHEN) | | |
| | --- | | |
| A | DE-A-3 337 619  (EXXON) | | |
| | --- | | |
| A | EP-A-0 072 920  (BASF) | | |
| | --- | | |
| A | EP-A-0 030 796  (MOBIL OIL) | | |
| | --- | | **TECHNICAL FIELDS SEARCHED (Int. Cl.4)** |
| A | US-A-3 235 486  (G. CONSTABARIS) | | |
| | ----- | | B 01 J  29/00 |

The present search report has been drawn up for all claims

| Place of search | Date of completion of the search | Examiner |
|---|---|---|
| THE HAGUE | 27-10-1987 | DEVISME F.R. |